# FASCICULE DE BREVET EUROPEEN

(11) **EP 4 165 712 B1**
(45) Date de publication et mention de la délivrance du brevet: **08.11.2023**
(21) Numéro de dépôt: 21851622.7
(22) Date de dépôt: 21.12.2021
(51) Int. Cl.: H01M 10/613, H01M 10/625, H01M 10/643, H01M 10/647, H01M 10/6555, H01M 10/6557, H01M 10/6568

(54) **DISPOSITIF POUR LA PROTECTION ET LE REFROIDISSEMENT D'UNE BATTERIE**
SCHUTZ- UND KÜHLVORRICHTUNG FÜR EINE BATTERIE
DEVICE FOR PROTECTING AND COOLING A BATTERY

(30) Priorité: 22.12.2020 FR 2013947
(43) Date de publication de la demande: 19.04.2023
(73) Titulaire: Airbus Defence and Space SAS, 31402 Toulouse Cedex 4 (FR)
(72) Inventeur: BERGERY, Julien, 31402 Toulouse CedeX 4 (FR); TEULIER, Romain, 31402 Toulouse Cedex 4 (FR); LAURENT, Julien, 31402 Toulouse Cedex 4 (FR)
(74) Mandataire: Plasseraud IP
(86) Numéro de dépôt international: PCT/FR2021/052410
(87) Numéro de publication internationale: WO 2022/136788

(56) Documents cités:
- EP-A1- 3 565 024
- WO-A1-2020/236854
- DE-A1-102018 125 283
- US-A1- 2020 365 932

## Description

### Domaine technique

La présente divulgation relève du domaine des batteries de stockage d'énergie électrique et concerne plus particulièrement un dispositif de protection thermique de batterie. La présente divulgation s'applique notamment à des batteries embarquées dans des aéronefs.

### Technique antérieure

Les batteries électriques sont généralement composées de plusieurs cellules reliées électriquement entre elles et fournissant chacune de l'énergie électrique. La fourniture d'énergie électrique s'accompagne notamment d'un échauffement des cellules. Certaines batteries, et notamment les batteries de type Lithium-ion, sont de plus exposées à un risque d'emballement thermique, qui engendre un dégagement de chaleur important et rapide d'une cellule de batterie, qui peut se propager aux autres cellules de la batterie et provoquer un emballement thermique de toutes les cellules voire leur explosion.

Un emballement thermique peut avoir des origines diverses, par exemple mécanique, en cas de casse du séparateur entre l'anode et la cathode, ou de défaut dans la fabrication de ce séparateur, provoquant un court-circuit interne. Une autre origine possible de l'emballement thermique est de nature électrique, en cas d'une mauvaise gestion des charges et décharges de la batterie, qui peut causer l'apparition de dendrites au sein d'une cellule. Les dendrites peuvent être à l'origine de courts-circuits et ainsi provoquer un emballement thermique. Une autre origine peut encore être thermique, dans le cas où l'échauffement d'une cellule fait fondre le séparateur entre l'anode et la cathode.

Afin d'assurer le refroidissement d'une batterie, et ainsi limiter les risques d'emballement thermique, il est connu par exemple du document EP2993435 de positionner une plaque d'échange thermique métallique, par exemple en aluminium, sous la batterie. Cette plaque absorbe et évacue la chaleur générée par la batterie.

Cependant, dans le cas notamment où la batterie est destinée à être embarquée dans un aéronef, ce type de solution apparait peu adapté à des besoins importants en électricité, puisque ces plaques auront alors nécessairement une masse importante pour pouvoir offrir une régulation thermique suffisante. Pour les applications aéronautiques, les exigences en matière de confinement d'une cellule de batterie sont en effet accrues et la certification RTCA DO-311A requiert notamment la garantie de non propagation d'un emballement thermique. Les documents WO2020236854A1, US2020365932A1, DE102018125283A1 et EP3565024A1 décrivent des dispositif de protection d'une batterie comprenant un boîtier adapté pour contenir un ensemble de cellules de stockage d'énergie électrique de la batterie.

### Résumé

La présente divulgation vient proposer un dispositif de protection thermique de batterie amélioré notamment pour une utilisation dans un aéronef.

A cet égard, il est proposé un dispositif de protection d'une batterie selon la revendication 1.

Selon un autre aspect, il est proposé un système de régulation thermique et un ensemble d'alimentation en énergie électrique.

Les caractéristiques exposées dans les paragraphes suivants peuvent, optionnellement, être mises en oeuvre, indépendamment les unes des autres ou en combinaison les unes avec les autres.

Dans des modes de réalisation, le liquide de régulation thermique est choisi pour être sous forme liquide dans les conditions opérationnelles normales de la batterie.

Dans des modes de réalisation, le dispositif comprend en outre un vase d'expansion relié au réseau de canaux.

Dans des modes de réalisation, les parois des cavités recevant les cellules présentent une zone de résistance réduite, de sorte qu'en cas de chaleur intense correspondant à un dégagement thermique exceptionnel lors d'un emballement d'une cellule, il se produise une rupture de la paroi, et une fuite du canal longeant cette paroi, dans la cavité, de sorte que le liquide de régulation thermique s'échappant à l'intérieur de la paroi se vaporise instantanément et réalise un refroidissement accru de la cellule.

Selon l'invention lesdites cloisons sont des doubles cloisons dont l'intérieur constitue ledit réseau de canaux.

Selon l'invention le réseau de canaux est constitué d'une pluralité de motifs reliant chacun plusieurs cavités et s'étendant sur toute la longueur le long des cavités.

Dans des modes de réalisation, le corps de boîtier réalise un maintien latéral de chaque cellule et est dimensionné de façon à présenter une épaisseur minimum déterminée entre chaque canal et la paroi de chaque cavité, pour permettre une tenue mécanique suffisante pour résister à une pression de sécurité.

Dans des modes de réalisation, la pression de sécurité est choisie au moins égale à une pression générée par une explosion de cellule lors d'un emballement.

Dans des modes de réalisation, le corps de boîtier est réalisé en matériau plastique.

Dans des modes de réalisation, le corps de boîtier est monobloc et obtenu par fabrication additive.

Dans des modes de réalisation, les cavités ouvertes présentent une section transversale circulaire et sont disposées en quinconce, les canaux présentant des profils en arcs de cercles et étant joints entre eux, les canaux en arcs de cercle longeant successivement les parois de cavités successives.

Dans des modes de réalisation, les cavités ouvertes présentent une section transversale rectangulaire et sont alignées selon au moins rangée, les canaux étant rectilignes.

Dans des modes de réalisation, les canaux circulent en périphérie du corps de boîtier et circulent également entre des rangées consécutives de cavités et/ou transversalement à ces rangées de cavités.

Dans des modes de réalisation, un système de régulation thermique de batterie est proposé, comprenant un dispositif de protection de batterie selon la description qui précède.

Dans des modes de réalisation, le système de régulation thermique comprend au moins un radiateur relié audit réseau de canaux.

Dans des modes de réalisation, le système de régulation thermique est dépourvu de circuit de mise en circulation du liquide de régulation thermique relié.

Dans des modes de réalisation, un ensemble d'alimentation en énergie électrique est proposé, comprenant un système selon la description qui précède pour le refroidissement d'une batterie comprenant des cellules de stockage d'énergie électrique.

Dans des modes de réalisation, les cellules dudit ensemble d'alimentation en énergie électrique sont de type Lithium-Ion.

Le dispositif de protection de batterie proposé permet avantageusement une utilisation plus sécurisée dans un aéronef et pour des besoins en électricité plus importants, en comparaison des dispositifs de l'art antérieur. Le dispositif de protection de batterie est par exemple facilement exploitable pour l'industrie aéronautique dans le respect des normes en vigueurs.

Le dispositif de protection de batterie est avantageusement fabriqué par fabrication additive, et notamment par stéréo-lithographie, ce qui autorise un réseau de canaux de géométrie complexe.

Le dispositif de protection de batterie permettant de garantir que chaque cavité est entourée d'un volume suffisant de liquide et d'homogénéiser la température de la batterie. Le réseau de canaux peut aussi être dimensionné de façon à minimiser les pertes de charge lors d'une mise en circulation du liquide de régulation thermique, dans un système de refroidissement.

Avantageusement encore le liquide de régulation thermique apporte une capacité d'absorption thermique permettant d'éviter un emballement thermique d'une cellule de stockage de l'énergie électrique.

Un autre avantage réside dans un montage facilité des cellules électriques dans le dispositif de protection.

Un autre avantage est de permettre de préserver la batterie pour la plupart des avaries. Le cas d'une avarie grave où deux cellules adjacentes s'emballent sera avantageusement géré en préservant les cellules restantes.

### Brève description des dessins

D'autres caractéristiques, détails et avantages apparaîtront à la lecture de la description détaillée ci-après, et à l'analyse des dessins annexés, sur lesquels :
**Fig. 1**

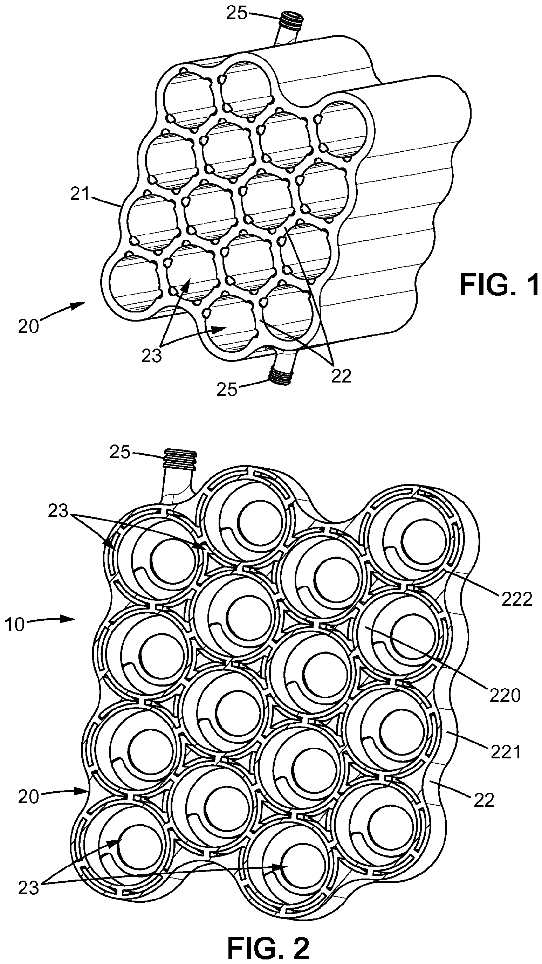

   [Fig. 1] montre un boîtier d'un dispositif de protection de batterie selon un mode de réalisation.
**Fig. 2**
   [Fig. 2] montre une vue en coupe du boîtier de la figure 1.
**Fig. 3**

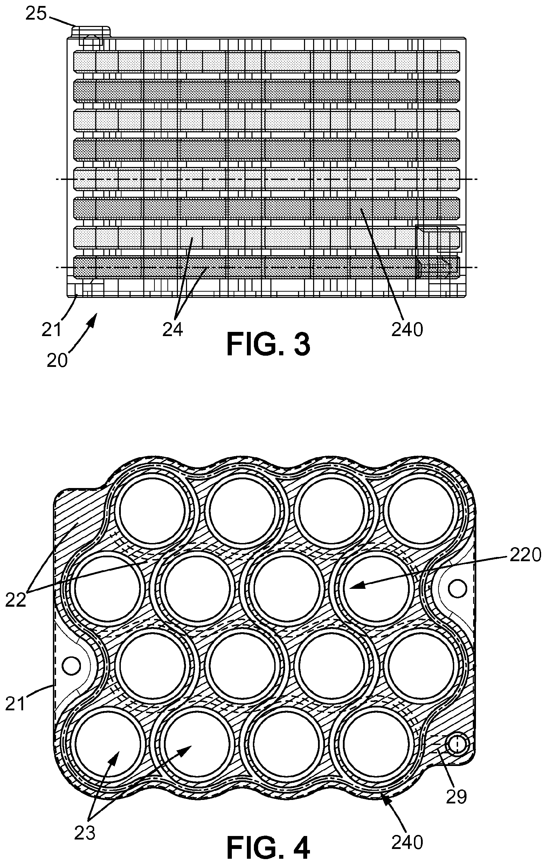

   [Fig. 3] montre une vue transversale en transparence d'un boîtier selon un mode de réalisation, selon un plan parallèle à l'axe longitudinal des emplacements de cellules de batterie.
**Fig. 4**
   [Fig. 4] montre une vue en coupe du boîtier de la figure 3, selon un plan de coupe transversal et perpendiculaire à l'axe longitudinal des emplacements de cellules de batterie.
**Fig. 5**

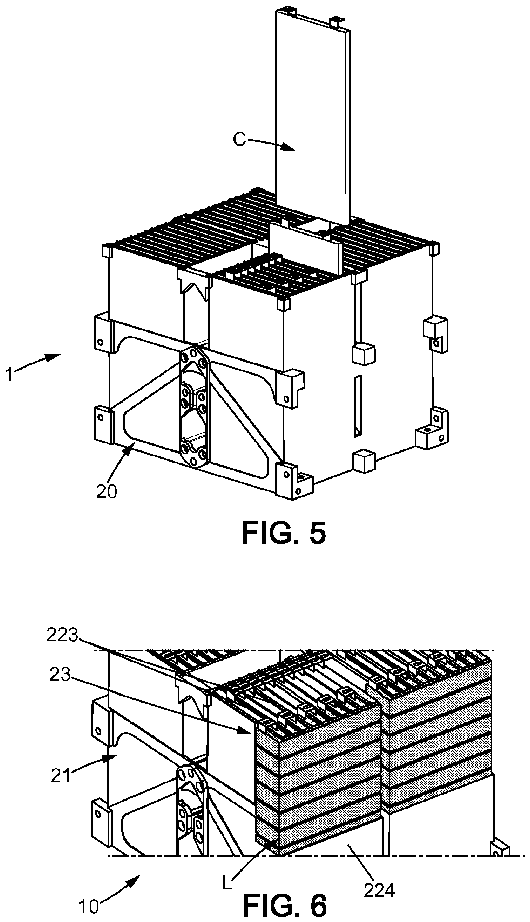

   [Fig. 5] montre une batterie comprenant des cellules sous forme de plaques et un dispositif de protection correspondant.
**Fig. 6**
   [Fig. 6] montre une vue partielle en transparence des canaux du boîtier du dispositif de protection de la figure 5.
**Fig. 7**

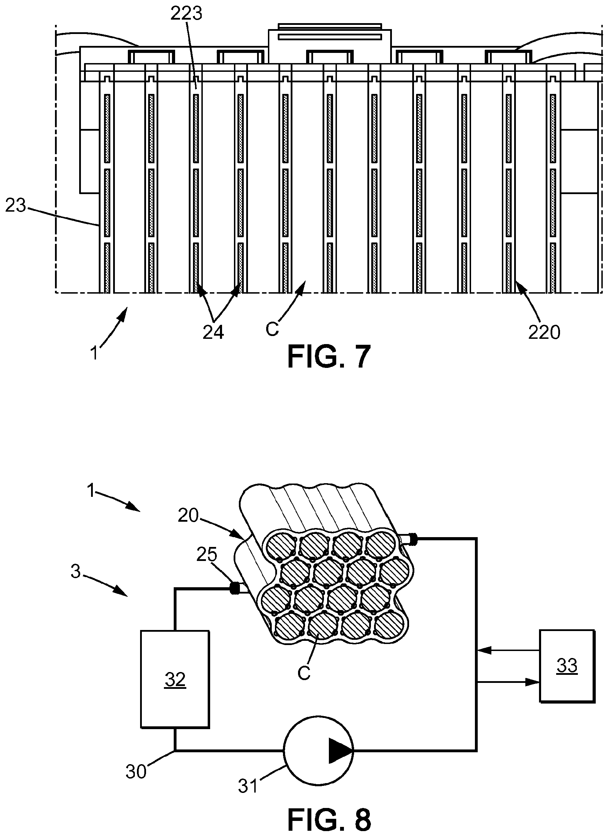

   [Fig. 7] représente une vue en coupe d'un boîtier du dispositif de protection de la figure 5.
**Fig. 8**
   [Fig. 8] représente schématiquement un système de refroidissement selon un mode de réalisation.

### Description des modes de réalisation

On va maintenant décrire des modes de réalisation d'un dispositif de protection 10 d'une batterie 1 comprenant une pluralité de cellules C, chaque cellule étant par exemple de type Lithium-ion.

On pourrait également utiliser d'autres batteries électrochimiques qui sont généralement sensibles au risque d'emballement thermique.

Sur les figures 1 à 4, sont représentés des modes de réalisation de dispositifs de protection 10 adaptés à des cellules de section circulaire.

Sur les figures 5 à 7, un autre mode de réalisation est représenté, où les cellules parallélépipédiques ou en forme de plaques sont de section rectangulaire.

Le dispositif de protection 10 comprend un boîtier 20 adapté pour contenir un ensemble de cellules de stockage d'énergie électrique. Ce boîtier 20 comprend un corps principal 21 comprenant un ensemble de cloisons 22, l'ensemble des cloisons 22 définissant des parois 220 délimitant des cavités 23 ouvertes à au moins une extrémité pour recevoir chacune une cellule. Une cellule sera par exemple fixée par collage dans sa cavité. Les cavités sont dimensionnées pour que leur paroi 220 vienne contre une des cellules. Sur les figures 1 à 4 on peut donc observer des cavités 23 cylindriques, tandis que dans le mode de réalisation des figures 5 à 7 sont illustrées des cavités 23 parallélépipédiques.

Le boîtier 20 comprend également un réseau de canaux 24 agencés dans le corps principal 21 du boîtier, comprenant une pluralité de canaux 24 longeant les parois 220 des cavités, en entourant par exemple partiellement chaque cavité. Ces canaux 24 permettent de refroidir les cellules contenues dans les cavités et, comme décrit plus en détails ci-après, permettent par exemple de contenir un éventuel emballement thermique en absorbant la chaleur qui serait dégagée lors d'un tel emballement thermique. Les cavités sont donc délimitées par des parois 220, le long desquelles s'étendent les canaux 24. Un canal peut s'étendre sur toute la dimension principale de la cavité ou plusieurs canaux peuvent être superposés le long de la dimension principale de la cavité.

Dans des modes de réalisation, les canaux sont agencés dans l'épaisseur des cloisons 22, c'est-à-dire que les cloisons dont des doubles cloisons dont l'intérieur constitue ledit réseau de canaux.

Le dispositif de protection 10 comprend en outre une quantité de liquide L de régulation thermique qui est contenu dans le réseau de canaux 24, le liquide de régulation thermique pouvant stocker de l'énergie calorifique. Dans des modes de réalisation, le liquide de régulation thermique occupe tout le volume des canaux 24. Ce liquide de régulation thermique est choisi pour être sous forme liquide dans les conditions opérationnelles normales de la batterie, notamment dans une plage de températures comprise entre -20°C et 60 °C. Par exemple, le liquide de régulation thermique peut être de l'eau avec un ou plusieurs additifs pour permettre un fonctionnement dans la gamme de température. Le liquide de régulation thermique peut être par exemple un liquide diélectrique.

De plus, Selon l'invention, le réseau de canaux est dimensionné pour que le volume de liquide de régulation thermique longeant chaque cavité soit suffisant pour absorber une quantité calorifique déterminée correspondant à un seuil d'énergie calorifique de sécurité, en considérant un volume de liquide statique, c'est-à-dire sans qu'il soit nécessaire de faire circuler le liquide pour absorber cette chaleur.

Par exemple, la quantité d'énergie thermique de sécurité peut correspondre à la quantité d'énergie calorifique générée en cas d'emballement thermique d'une ou de deux cellules. Le dispositif de protection thermique pourra avantageusement être dimensionné sur-mesure, en utilisant un liquide de régulation thermique de capacité thermique connue, et en déterminant à partir de cette capacité thermique un volume minimal de liquide longeant chaque cavité pour pouvoir absorber une énergie calorifique supérieure audit seuil. De préférence, une marge de sécurité est prévue de sorte que le volume de liquide entourant par exemple une cavité soit supérieur au volume minimal permettant d'absorber la chaleur générée par l'emballement thermique de deux cellules adjacentes.

Dans des modes de réalisation, il n'est pas nécessaire que l'intégralité de la surface de la paroi délimitant une cavité soit entourée de liquide de régulation thermique, pourvu que le volume de liquide longeant la cavité soit suffisant.

Le réseau de canaux est par exemple configuré pour que les canaux, et donc le liquide de régulation thermique entourant une cavité soit régulièrement réparti autour de la cavité, pour permettre d'optimiser l'uniformité de température du liquide.

Chaque cellule C bénéficie d'une protection mécanique assurée par la paroi 220 formant la cavité dans laquelle elle est insérée. L'épaisseur de cloison 22, par exemple en matière plastique, entre un canal 24 et la paroi 220 de cavité que longe ce canal est supérieure à une épaisseur minimum déterminée permettant à la paroi d'assurer une tenue mécanique suffisante pour résister à une pression de sécurité, par exemple une pression générée par une explosion de cellule en cas d'emballement thermique. Par exemple, l'épaisseur de chaque cloison entre sa surface formant la paroi 220 délimitant une cavité et un canal 24 peut être comprise entre 1mm et 2mm. En choisissant une cloison d'épaisseur minimum, on favorise les échanges thermiques et on réduit le nombre de canaux. En choisissant une paroi plus renforcée, les échanges de chaleur sont moins importants et seront par exemple compensés en augmentant le nombre de canaux, c'est-à-dire en augmentant le volume de liquide de régulation thermique longeant chaque cavité.

En cas d'emballement thermique, la cloison 22 permet par exemple de contenir une explosion d'une cellule se propageant latéralement, et donc permet de prévenir la dégradation des cellules adjacentes. De plus, lors du dégagement de chaleur engendré par l'emballement thermique, le liquide de régulation thermique permet par exemple d'absorber cette chaleur qui n'est pas communiquée aux cellules adjacentes et la propagation de l'emballement thermique peut être ainsi empêchée.

La chaleur absorbée par le liquide de régulation thermique se répartit naturellement dans l'ensemble du corps principal via les canaux du réseau. La chaleur est ainsi absorbée et peut éventuellement être restituée à une ou plusieurs cellules. La chaleur peut donc être stockée dans le corps principal 21. En variante, la chaleur peut également être diffusée dans l'environnement. Par exemple, un radiateur (non représenté) peut être relié au réseau de canaux, par exemple via deux embouts, et permettre un refroidissement accru par diffusion de la chaleur dans l'environnement.

En cas de chaleur intense, par exemple sur un point d'une paroi, il peut apparaître des microbulles de liquide de régulation thermique gazéifié qui vont automatiquement revenir à l'état liquide et ainsi créer une circulation naturelle du liquide de régulation thermique, favorisant la diffusion de chaleur.

Dans des modes de réalisation, une partie du corps principal 21 peut être déformable élastiquement pour permettre une déformation du corps principal 21 en cas de surpression liée à l'échauffement du liquide de régulation thermique. Dans des modes de réalisation, le boîtier 20 peut comprendre un vase d'expansion (non représenté) relié au réseau de canaux.

Dans des modes de réalisation, et comme décrit plus en détails ci-après, une pompe peut être connectée au réseau de canaux pour faire circuler le liquide de régulation thermique et accroître encore le refroidissement. Dans ce cas, chaque canal sera par exemple conçu avec une section minimum et une longueur la plus courte possible pour réduire les pertes de charge.

Dans des modes de réalisation, les parois 22 des cavités recevant les cellules peuvent présenter une zone de résistance réduite (non représentée), de sorte qu'en cas de chaleur intense correspondant à un dégagement thermique exceptionnel lors d'un emballement d'une cellule, il se produise une rupture de la paroi, et une fuite du canal longeant cette paroi, dans la cavité. Ainsi, le liquide de régulation thermique s'échappant à l'intérieur de la paroi se vaporiserait instantanément et réaliserait un refroidissement accru de la cellule, dont l'emballement ne se propagerait pas aux cellules adjacentes. La rupture de la zone fragilisée ne signifie pas toutefois la rupture d'une cloison, les cloisons gardant leur intégrité pour protéger les cellules notamment en cas d'explosion d'une cellule.

On peut également prévoir la rupture de deux parois de cavités adjacentes lors d'un emballement de deux cellules adjacentes. Le dispositif de protection comprenant un seul réseau pourrait alors se vider complètement via la ou les ouvertures débouchant dans la ou les cavités et ainsi apporter un refroidissement maximum.

L'emballement d'une cellule provoque en effet la mise en sécurité de la batterie dont les cellules non endommagées sont alors sollicitées au minimum. L'échauffement des cellules de stockage d'énergie électrique est alors réduit et ne nécessite plus leur refroidissement.

Le dimensionnement du volume de fluide longeant les parois, déterminé de façon à pouvoir absorber la chaleur générée par l'emballement thermique de deux cellules, permet par exemple de répondre simplement à une exigence de la certification RTCA DO-311A.

La disposition des canaux peut être variable en fonction de la configuration du boîtier de batterie.

Dans des modes de réalisation, le réseau de canaux peut être constitué d'une pluralité de motifs reliant chacun plusieurs cavités et s'étendant sur toute la longueur le long des cavités.

Dans des modes de réalisation, le corps principal 21 du boîtier de batterie peut comprendre un ensemble de cavités cylindriques de section transversale circulaire disposées en quinconce. Les cavités sont disposées avec leurs axes longitudinaux parallèles pour former des rangées de cavités. Dans ce cas, le réseau de canaux peut comprendre des canaux s'étendant transversalement à la direction principale des cavités, en présentant des profils en arcs de cercle circulant entre des rangées consécutives de cavités et/ou transversalement à ces rangées, ou encore en périphérie du corps de boîtier. En variante, le réseau de canaux peut comprendre des canaux s'étendant le long de la direction principale des cavités, en présentant une section en arc de cercle pour longer les parois des cavités.

Dans d'autres modes de réalisation, le corps principal 21 du boîtier de batterie peut comprendre un ensemble de cavités alignées, présentant une section transversale rectangulaire, et peut comprendre des canaux rectilignes s'étendant entre deux cavités consécutives.

Selon un premier exemple représenté sur la figure 1, le boîtier 20 est adapté pour recevoir des cellules de forme cylindrique de section transversale circulaire selon une configuration dans laquelle les cellules, et donc les cavités permettant de les recevoir sont disposées en quinconce. Dans cette configuration, les cavités sont alignées latéralement en rangées parallèles, où, pour des raisons de compacité, chaque rangée est décalée par rapport à la rangée voisine d'une distance égale à la moitié de la distance entre les axes longitudinaux de deux cavités adjacentes.

En référence à la figure 2, le corps principal 21 du boîtier peut alors comprendre un ensemble de cloisons 22 cylindriques délimitant chaque cavité cylindrique, les cloisons cylindriques étant reliées entre elles et à une cloison externe 221 périphérique du corps principal. Plusieurs canaux sont par exemple réalisés autour de chaque cavité et séparés entre eux par des entretoises 222. Les canaux peuvent s'étendre en longueur sur tout ou partie de la dimension principale des cavités. Les canaux 24 s'étendent par exemple parallèlement à l'axe longitudinal des cavités du corps 21 du boîtier, en étant situés à l'intérieur des cloisons 22 cylindriques délimitant chaque cavité.

Dans cet exemple, les canaux s'étendent le long de toute la dimension principale des cellules, et présentent une section transversale en forme d'arc de cercle, permettant de longer la paroi 21 délimitant chaque cavité. Chaque cavité est avantageusement entourée de plusieurs canaux ou portions de canaux, de section transversale en arcs de cercle, qui sont répartis régulièrement sur la circonférence de la cellule. Pour assurer une communication de fluide entre les canaux, deux canaux longeant deux cellules adjacentes peuvent être reliés par leurs extrémités de façon à former un canal en V, et trois canaux longeant trois cellules adjacentes peuvent être reliés par leurs extrémités de façon à former un canal sensiblement triangulaire.

Dans un autre exemple de configuration du réseau de canaux représenté sur les figures 3 et 4, cet exemple étant applicable à la même forme de cellule que l'exemple précédent, le réseau de canaux 24 comprend un ensemble d'étages 240 superposés, chaque étage de canaux s'étendant transversalement à l'axe longitudinal des cavités cylindriques 23. Dans chaque étage, un ensemble de canaux est agencé de sorte que chaque canal s'étende entre deux cavités adjacentes. De plus les étages 240 de canaux 24 présentent deux configurations qui sont alternées le long de la superposition des étages. Une première configuration représentée en traits pleins sur la figure 4 comprend des canaux s'étendant sensiblement transversalement à la direction des rangées des cavités alignées, de sorte que chaque canal traverse l'ensemble des rangées de cavités. Une deuxième configuration représentée en traits pointillés sur la figure 4 comprend des canaux 24 s'étendant sensiblement selon la direction des rangées des cellules, et chaque canal s'étend entre deux rangées adjacentes de cavités 23. De plus, afin de maximiser la compacité et les performances thermiques du dispositif de protection, tous les canaux peuvent être avantageusement curvilignes, de façon à présenter une succession de portions en arc de cercle joints en eux, les arcs de cercle longeant successivement la paroi entourant chaque cellule, et à se trouver ainsi au plus près de chaque cellule.

Dans un troisième exemple de configuration représenté sur les figures 5 à 7, le boîtier 20 est adapté pour recevoir des cellules C de forme parallélépipédique et comprend à cet égard un ensemble de cavités parallélépipédiques, présentant une section transversale rectangulaire et étant alignées selon au moins une rangée, dans une direction perpendiculaire à la direction principale des cellules, correspondant par exemple à leur axe central longitudinal. Le corps principal 21 de boîtier comprend par exemple des cloisons 223 de section rectangulaire adaptées pour former des cloisons séparatives entre les cavités. Le corps principal 21 peut également comprendre des cloisons externes 224 périphériques s'étendant perpendiculairement ou parallèlement aux cloisons 223 aux extrémités de celles-ci.

Dans cette configuration, et comme représenté sur la figure 7, le réseau de canaux peut être agencé à l'intérieur des cloisons 223, et comprendre un ensemble de canaux rectilignes. Dans des modes de réalisation, et comme représenté schématiquement sur la figure 6 où le liquide L de régulation thermique est représenté, le réseau de canaux 23 peut comprendre des canaux agencés dans les cloisons 223 de séparation entre les cavités et dans les cloisons périphériques et notamment les cloisons 224 transversales, ces canaux étant en communication de fluide de façon à pouvoir faire circuler le liquide L à l'intérieur du boîtier.

Le dispositif de protection de batterie peut être commandé pour que le liquide de régulation thermique reste statique ou qu'il soit mis en circulation. Dans ce cas, le boîtier 20 comprend en outre au moins deux embouts tubulaires 25 montés sur le corps principal 21, en communication de fluide avec le réseau de canaux, et adaptés pour être raccordés à un circuit de circulation de fluide. Un exemple de tels embouts 25 est représenté sur le boîtier des figures 1 et 2. Dans ces cas, le boîtier 20 comprend également des canaux 29 spécifiques de raccordement entre les embouts 25 et le réseau de canaux 23 destiné à refroidir les cavités. Le réseau de canaux 23 est alors avantageusement conçu pour réduire les pertes de charge dans le liquide de régulation thermique lors de la circulation de celui-ci.

Dans des modes de réalisation, afin de réaliser un réseau de canaux de géométrie complexe, par exemple dans le cas décrit ci-avant en référence aux figures 3 et 4 dans lequel les canaux sont curvilignes et agencés en étages 240 superposés de configurations alternées, le bloc principal 21 du boîtier est avantageusement une pièce monobloc obtenue par fabrication additive, et de préférence par stéréo-lithographie. Les matériaux pouvant être choisis pour réaliser le bloc principal 21 sont des matériaux compatibles avec le procédé de stéréo-lithographie, présentant une résistance mécanique et thermique adaptée. On pourra choisir, par exemple, des résines proches du polycarbonate, éventuellement chargé de particules de céramique. On peut par exemple choisir la résine commercialisée par la société 3DSystems sous le nom commercial Accura SL 5530.

En référence à la figure 8, on a représenté un système 3 de régulation thermique comprenant au moins une batterie telle que décrite ci-avant, et un circuit de circulation 30 de fluide relié au réseau de canaux, afin de faire circuler le liquide de régulation thermique contenu dans les canaux pour le faire refroidir. Dans ce cas, chaque boîtier 20 de batterie comprend des embouts 25 de raccordement au circuit de circulation de fluide. Le circuit de circulation 30 comprend en outre au moins une pompe 31, adaptée pour faire circuler le liquide, et un dispositif de refroidissement 32 du liquide de régulation thermique.

Le dispositif de régulation thermique peut comprendre un ou plusieurs radiateurs, ou un ou plusieurs échangeurs thermiques avec un circuit de fluide à réchauffer, par exemple l'air contenu dans une cabine d'aéronef.

Dans des modes de réalisation, le système de régulation thermique 3 peut également comprendre un dispositif de commande 33 adapté pour piloter le système de refroidissement selon un premier mode de fonctionnement dans lequel la pompe n'est pas actionnée où le fluide est alors statique et n'est pas refroidi, et selon un deuxième mode de fonctionnement dans lequel la pompe est actionnée pour entrainer le fluide en circulation et le refroidir.

Le système de refroidissement peut également comprendre des moyens de fermeture (non représenté) de chaque réseau de canaux, permettant d'isoler chaque réseau de canaux du dispositif de protection de batterie. Le cas échéant, le dispositif de commande 33 peut également être adapté pour commander l'ouverture ou la fermeture des moyens de fermeture respectivement dans le premier ou le deuxième mode de fonctionnement.

Par exemple, dans le cas où le système de refroidissement est embarqué dans un aéronef, le premier mode de fonctionnement peut être utilisé lors des phases de vol de l'aéronef, et le deuxième mode de fonctionnement peut être utilisé pour les phases au sol.

En variante, le système de régulation thermique peut être totalement dépourvu de circuit de mise en circulation du liquide de régulation thermique puisque le réseau de canaux est dimensionné de sorte que la quantité de liquide de régulation thermique contenue dans le réseau soit, à elle seule et sans circulation du liquide, suffisante pour absorber la quantité d'énergie calorifique déterminée correspondant au seuil de sécurité.

## Revendications

1. Dispositif de protection (10) d'une batterie (1) comprenant un boîtier (20) adapté pour contenir un ensemble de cellules (C) de stockage d'énergie électrique de la batterie, le boîtier comprenant :
- un corps de boîtier (21) s'étendant autour des cellules et comprenant un ensemble de cloisons (22) formant des cavités (23) ouvertes à au moins une extrémité pour recevoir chacune une des cellules (C), chaque cavité étant délimitée par une paroi (220) destinée à venir en contact avec une des cellules, et
- au moins un réseau de canaux (24) longeant les parois des cavités, comprenant un liquide de régulation thermique de capacité thermique déterminée,
**caractérisé en ce que** les canaux sont agencés dans les cloisons (22) qui sont des doubles cloisons dont l'intérieur constitue ledit réseau de canaux, et forment au moins une pluralité de motifs reliant chacun plusieurs cavités, les canaux s'étendant sur toute la longueur des cavités, le volume de liquide de régulation thermique contenu dans les canaux et longeant la paroi de chaque cavité, en considérant un volume de liquide statique, c'est-à-dire sans qu'il soit nécessaire de faire circuler le liquide pour absorber cette chaleur, étant supérieur à un volume de liquide permettant une absorption de la quantité d'énergie calorifique dégagée par un emballement thermique de deux cellules.

2. Dispositif de protection (10) de batterie selon la revendication 1, **caractérisé en ce que** le liquide de régulation thermique est choisi pour être sous forme liquide dans les conditions opérationnelles normales de la batterie.

3. Dispositif de protection (10) de batterie selon l'une des revendications précédentes, comprenant en outre un vase d'expansion relié au réseau de canaux.

4. Dispositif de protection (10) de batterie selon l'une des revendications précédentes, **caractérisé en ce que** les parois (22) des cavités recevant les cellules présentent une zone de résistance réduite, de sorte qu'en cas de chaleur intense correspondant à un dégagement thermique exceptionnel lors d'un emballement d'une cellule, il se produise une rupture de la paroi, et une fuite du canal longeant cette paroi, dans la cavité, de sorte que le liquide de régulation thermique s'échappant à l'intérieur de la paroi se vaporise instantanément et réalise un refroidissement accru de la cellule.

5. Dispositif de protection (10) de batterie selon l'une des revendications précédentes, dans lequel le corps de boîtier (21) réalise un maintien latéral de chaque cellule et est dimensionné de façon à présenter une épaisseur minimum déterminée entre chaque canal et la paroi de chaque cavité, pour permettre une tenue mécanique suffisante pour résister à une pression de sécurité.

6. Dispositif de protection (10) de batterie selon la revendication précédente, dans lequel la pression de sécurité est choisie au moins égale à une pression générée par une explosion de cellule lors d'un emballement.

7. Dispositif de protection (10) de batterie selon l'une des revendications précédentes, dans lequel le corps de boîtier (21) est réalisé en matériau plastique.

8. Dispositif de protection (10) de batterie selon l'une des revendications 1 à 7, dans lequel les cavités (23) ouvertes présentent une section transversale rectangulaire et sont alignées selon au moins rangée, les canaux étant rectilignes.

9. Dispositif de protection (10) de batterie selon la revendication 8, dans lequel les canaux circulent en périphérie du corps de boîtier et circulent également entre des rangées consécutives de cavités et/ou transversalement à ces rangées de cavités.

10. Système de régulation thermique (3) de batterie comprenant un dispositif de protection de batterie selon l'une des revendications précédentes.

11. Système de régulation thermique (3) de batterie selon la revendication précédente comprenant au moins un radiateur (32) relié audit réseau de canaux.

12. Système de régulation thermique (3) de batterie selon la revendication 10 ou 11, **caractérisé en ce qu'**il est dépourvu de circuit de mise en circulation du liquide de régulation thermique.

13. Ensemble d'alimentation en énergie électrique comprenant un système selon la revendication 10 à 12 pour le refroidissement (3) d'une batterie comprenant des cellules de stockage d'énergie électrique.

14. Ensemble d'alimentation en énergie électrique selon la revendication précédente, dans laquelle les cellules (C) sont de type Lithium-ion.

## Patentansprüche

1. Schutzvorrichtung (10) für eine Batterie (1), die ein Gehäuse (20) aufweist, das eingerichtet ist, eine Anordnung von elektrische Energie speichernden Zellen (C) der Batterie unterzubringen, wobei das Gehäuse aufweist:
- einen Gehäusekörper (21), der sich um die Zellen herum erstreckt und eine Anordnung von Zwischenwänden (22) aufweist, die Hohlräume (23) bilden, die an mindestens einem Ende offen sind, um jeweils eine der Zellen (C) aufzunehmen, wobei jeder Hohlraum von einer Wand (220) begrenzt wird, die vorgesehen ist, in Kontakt mit einer der Zellen zu kommen, und
- mindestens ein Kanalnetz (24) von Kanälen, die die Wände der Hohlräume entlangführen und eine Wärmeregulationsflüssigkeit einer bestimmten thermischen Kapazität aufweisen,
**dadurch gekennzeichnet, dass** die Kanäle in den Zwischenwänden (22) angeordnet sind, die Doppelwände sind, deren Inneres das Kanalnetz bildet, und mindestens mehrere Motive bilden, die jeweils mehrere Hohlräume verbinden, wobei die Kanäle sich über die gesamte Länge der Hohlräume erstrecken, wobei das in den Kanälen enthaltene und die Wand jedes Hohlraums entlangführende Wärmeregulationsflüssigkeitsvolumen, unter Berücksichtigung eines statischen Flüssigkeitsvolumens, also ohne dass es notwendig wäre, die Flüssigkeit zirkulieren zu lassen, um diese Wärme zu absorbieren, größer ist als ein Flüssigkeitsvolumen, das eine Absorption der Wärmeenergiemenge, die durch eine thermische Überlastung von zwei Zellen freigesetzt wird, erlaubt.

2. Batterieschutzvorrichtung (10) nach Anspruch 1, **dadurch gekennzeichnet, dass** die Wärmeregulationsflüssigkeit gewählt ist, um unter normalen Betriebsbedingungen der Batterie in flüssiger Form zu sein.

3. Batterieschutzvorrichtung (10) nach einem der vorstehenden Ansprüche, aufweisend ferner ein mit dem Kanalnetz verbundenes Ausdehnungsgefäß.

4. Batterieschutzvorrichtung (10) nach einem der vorstehenden Ansprüche, **dadurch gekennzeichnet, dass** die Wände (22) der die Zellen aufnehmenden Hohlräume eine Zone mit verringerter Festigkeit aufweisen, so dass im Fall einer starken Hitze, die einer außergewöhnlichen Wärmefreisetzung bei einer Überlastung einer Zelle entspricht, sich in dem Hohlraum ein Bruch der Wand und eine Undichtigkeit des diese Wand entlangführenden Kanals ereignet, so dass die Wärmeregulationsflüssigkeit, die dem Inneren der Wand entweicht, sofort verdampft und eine vermehrte Kühlung der Zelle verwirklicht.

5. Batterieschutzvorrichtung (10) nach einem der vorstehenden Ansprüche, in welcher der Gehäusekörper (21) einen lateralen Halt jeder Zelle bereitstellt und derart dimensioniert ist, dass er eine bestimmte Mindestdicke zwischen jedem Kanal und der Wand jedes Hohlraums hat, um eine ausreichende mechanische Beschaffenheit zu erlauben, um einem Sicherheitsdruck standzuhalten.

6. Batterieschutzvorrichtung (10) nach dem vorstehenden Anspruch, in welcher der Sicherheitsdruck gewählt ist, um mindestens gleich einem Druck zu sein, der durch eine Zellexplosion bei einer Überlastung erzeugt wird.

7. Batterieschutzvorrichtung (10) nach einem der vorstehenden Ansprüche, in welcher der Gehäusekörper (21) aus einem Kunststoffmaterial hergestellt ist.

8. Batterieschutzvorrichtung (10) nach einem der Ansprüche 1 bis 7, in welcher die offenen Hohlräume (23) einen rechtwinkligen transversalen Querschnitt haben und in mindestens einer Reihe ausgerichtet sind, wobei die Kanäle geradlinig sind.

9. Batterieschutzvorrichtung (10) nach Anspruch 8, in welcher die Kanäle am Umfang des Gehäusekörpers umlaufen und auch zwischen aufeinanderfolgenden Reihen von Hohlräumen und/oder transversal zu diesen Reihen von Hohlräumen umlaufen.

10. System zur Wärmeregulation (3) einer Batterie aufweisend eine Batterieschutzvorrichtung nach einem der vorstehenden Ansprüche.

11. System zur Wärmeregulation (3) einer Batterie nach dem vorstehenden Anspruch, aufweisend mindestens einen mit dem Kanalnetz verbundenen Radiator (32).

12. System zur Wärmeregulation (3) einer Batterie nach Anspruch 10 oder 11, **dadurch gekennzeichnet, dass** es keinen Kreislauf zum Setzen der Wärmeregulationsflüssigkeit in Zirkulation aufweist.

13. Anordnung für elektrische Energieversorgung aufweisend ein System nach dem Anspruch 10 bis 12 für die Kühlung (3) einer Batterie, die elektrische Energie speichernde Zellen aufweist.

14. Anordnung für elektrische Energieversorgung nach dem vorstehenden Anspruch, in welcher die Zellen (C) vom Lithium-Ionen-Typ sind.

## Claims

1. A device (10) for protecting a battery (1) comprising a casing (20) adapted to contain a set of cells (C) for storing electrical energy from the battery, the casing comprising:
- a casing body (21) extending around the cells and comprising a set of partitions (22) forming cavities (23) open at least at one end to each receive one of the cells (C), each cavity being delimited by a wall (220) intended to contact one of the cells, and
- at least one network of channels (24) running along the walls of the cavities, comprising a thermal regulation liquid of determined heat capacity,
**characterised in that** the channels are arranged in the partitions (22) which are double partitions, the interior of which constitutes said network of channels, and form at least a plurality of patterns each connecting several cavities, the channels extending over the entire length of the cavities, the volume of thermal regulation liquid contained in the channels and running along the wall of each cavity, considering a volume of static liquid, that is to say without it being necessary to circulate the liquid to absorb this heat, being greater than a volume of liquid allowing absorption of the amount of heat energy released by a thermal runaway of two cells.

2. The device for protecting a battery (10) according to claim 1, **characterised in that** the thermal regulation liquid is chosen to be in liquid form under normal operational conditions of the battery.

3. The device for protecting a battery (10) according to one of the preceding claims, further comprising an expansion tank connected to the network of channels.

4. The device for protecting a battery (10) according to one of the preceding claims, **characterised in that** the walls (22) of the cavities receiving the cells have a zone of reduced resistance, so that in the event of intense heat corresponding to an exceptional thermal release during a runaway of a cell, there is a rupture of the wall, and a leak from the channel running along this wall, into the cavity, so that the thermal regulation liquid escaping inside the wall instantly vaporises and achieves increased cooling of the cell.

5. The device for protecting a battery (10) according to one of the preceding claims, wherein the casing body (21) provides lateral support for each cell and is dimensioned so as to have a minimum determined thickness between each channel and the wall of each cavity, to allow sufficient mechanical strength to withstand a safety pressure.

6. The device for protecting a battery (10) according to the preceding claim, wherein the safety pressure is chosen at least equal to a pressure generated by a cell explosion during a runaway.

7. The device for protecting a battery (10) according to one of the preceding claims, wherein the casing body (21) is made of plastic material.

8. The device for protecting a battery (10) according to one of claims 1 to 7, wherein the open cavities (23) have a rectangular cross-section and are aligned along at least one row, the channels being rectilinear.

9. The device for protecting a battery (10) according to claim 8, wherein the channels circulate around the periphery of the casing body and also circulate between consecutive rows of cavities and/or transversely to these rows of cavities.

10. A battery thermal regulation system (3) comprising a device for protecting a battery according to one of the preceding claims.

11. The battery thermal regulation system (3) according to the preceding claim comprising at least one radiator (32) connected to said network of channels.

12. The battery thermal regulation system (3) according to claim 10 or 11, **characterised in that** it has no circuit for circulating the thermal regulation liquid.

13. An electrical energy supply assembly comprising a system according to claim 10 to 12 for cooling (3) a battery comprising electrical energy storage cells.

14. The electric power supply assembly according to the preceding claim, wherein the cells (C) are of the Lithium-Ion type.
